# EUROPÄISCHE PATENTSCHRIFT

(11) **EP 1 653 879 B1**
(45) Veröffentlichungstag und Bekanntmachung des Hinweises auf die Patenterteilung: **29.02.2012**
(21) Anmeldenummer: 04738100.9
(22) Anmeldetag: 21.07.2004
(51) Int. Cl.: A61C 13/00, A61C 8/00

(54) **ROHLING UND VERFAHREN ZUR HERSTELLUNG EINER ZAHNKRONE**
BLANK AND METHOD FOR PRODUCING A DENTAL CROWN
EBAUCHE ET PROCEDE POUR REALISER UNE COURONNE DENTAIRE

(30) Priorität: 15.08.2003 EP 03405597
(43) Veröffentlichungstag der Anmeldung: 10.05.2006
(73) Patentinhaber: Quarz Partners AG, 8004 Zürich (CH)
(72) Erfinder: Mörmann, Jeannette, 8053 Zürich (CH)
(74) Vertreter: Sutter, Kurt
(86) Internationale Anmeldenummer: PCT/CH2004/000460
(87) Internationale Veröffentlichungsnummer: WO 2005/016171

(56) Entgegenhaltungen:
- EP-A- 0 455 854
- EP-A- 1 023 876
- EP-A- 1 062 916
- WO-A-01/80768
- US-A- 5 527 182
- US-A- 5 674 069

## Beschreibung

### Technisches Gebiet

Die Erfindung betrifft einen Rohling und ein Verfahren zur Herstellung einer Zahnkrone sowie einen Teilesatz mit einem derartigen Rohling gemäss Oberbegriff der unabhängigen Ansprüche. Insbesondere beschreibt das Verfahren die Herstellung von Zahnkronen mittels CAD/CAM, CAM oder Kopierschleifvorrichtungen als prothetische Suprastruktur für Zahnimplantate unter Verwendung von Rohlingsblöcken aus restaurativem Material, die mit einem integrierten subgingival-anatomischen Implantat-Anschlussteil versehen sind, welcher eine implantattypische Fixtur aufweist und den direkten Anschluss einer aus dem Block hergestellten Krone an den Kopf des Zahnimplantats erlaubt.

### Hintergrund

Ein konventioneller Rohlingsblock, allerdings in Plattenform, ist aus EP 1 062 916 für eine dentales CAD/CAM System bekannt, das im zahntechnischen Grosslabor zur Herstellung von individuellem brückenartigem Zahnersatz unter Verwendung der vom Zahnarzt gelieferten Unterlagen benützt wird.

Implantate nehmen in der Mehrzahl Achsenneigungen ein, die von den Achsen der Nachbarzähne abweichen. Diese Achsabweichung wird konventionell (auch in EP 1 062 916; Fig.5) bei der Konstruktion und Fertigung einer Krone durch die zur Kaufläche gerichtete Konizität des Abutments ausgeglichen. Dies geschieht in EP 1 062 916 unter Berücksichtigung der sog. Basisdaten der Kiefersituation und der Lage der Implantathilfselemente, aus welchen die Neigung, die Implantierungstiefe, die Stellung des Implantates und die Ausrichtung des Positionierungselementes, beispielsweise Hex, etc. ermittelt werden. Im Weiteren werden sog. Abutmentdaten erzeugt (z.B. mit Hilfe eines Wax-up). Anschliessend wird in der CAD/CAM Anlage ein individuelles Abutment aus einem Rohlingsblock durch allseitig spanabhebende Bearbeitung erzeugt. Mit Hilfe sog. Einschubdaten werden die Abutments so gestaltet, dass die Kronen unter Berücksichtigung der Einschubrichtung aufgesetzt werden können. Bei Verwendung eines konfektionierten Norm-Abutments muss dieses maschinell achskonform individualisiert werden. Die Abutments können nach der bekannten Technik (EP 1 062 916, Fig. 8A, 8B, 8C, 8D) auch direkt aus dem Plattenrohling hergestellt werden. Der Rohling in Form einer Platte enthält in den Bereichen, aus welchen die Abutments gefertigt werden je ein Positionierungselement 16. Die Positionierungselemente 16 können beliebige rotationsverhindernde Implantat-Anschlussformen bilden, z.B. ein Hexagon, Octagon, Rhombus, einen Ovalzylinder, die gemäss EP 1 062 916 Fig. 8B alle nach aussen ragen. Aus einer Platte können bei dieser Ausführung mehrere Verbindungsstücke hergestellt werden, die dazu bestimmt sind, auf je einem Implantat befestigt zu werden.

In EP 1 062 916 wird ferner gelehrt, wie aus einem Plattenrohling sog. "Integralteile" aus demselben Material in einem Bearbeitungsgang hergestellt werden.

Die Herstellung von Zahnkronen zur Versorgung von Implantaten per Computerdesign erfolgt üblicherweise über den Zwischenschritt der Herstellung von prothetischen Aufbauten ("Implantat-Abutment") in Form eines Zahnstumpfes (Hegenbarth 1999, Implantologie 3: 297-307), dies in Analogie zur Herstellung von Kronen bei noch vorhandenen natürlichen Zähnen. Bei diesen präpariert der Zahnarzt die noch vorhandene Zahnhartsubstanz zu einer pfeilerartigen, im Wesentlichen der Zahnachse und einer Einschubachse folgenden, zur Kaufläche bzw. Okklusionsebene hin zirkulär konvergenten Stumpfform, die zur Aufnahme der künstlichen Vollkrone geeignet ist. Bei Zahnimplantaten können vorkommende Abweichungen der Achsrichtung gegenüber der Okklusionsebene von bis zu 20 Winkelgraden mittels Ausrichtung der Einschubachse des Implantat-Abutments ausgeglichen werden. Für die Herstellung von Implantat-Abutments und -Kronen ist die genaue Erfassung der Position des Implantats selbst und auch der den Implantatkopf umgebenden Gingiva von besonderer Wichtigkeit. Beide bestimmen die anatomisch korrekte Gestaltung des Implantat-Abutments im subgingivalen Bereich. Der Umriss der Krone im gingivalen Bereich soll dem der natürlichen Zahnwurzel gleichen. Der Übergang zur Krone (Emergenzprofil) orientiert sich ebenfalls am natürlichen Zahn, um eine natürliche Gingivakontur zu erzielen. Mit Hilfe eines "Guide-Pins" und eines mit einer Skala versehenen "T-Bars" wird die Implantatposition dreidimensional in den Rechner des Computers übertragen. Während der auf das Implantat aufgeschraubte "Guide-Pin" die oro-bukkale und mesio-distale Ausrichtung des Implantates darstellt, gibt der "T-Bar" die Höhenposition des Implantatkopfes im gingivalen Bereich des Modells wider. Damit ist die Achsenneigung und die Höhenposition des Implantatkopfes für das individuelle Design des "Abutments" bekannt (Hegenbarth 1999, Implantologie 3: 297-307). Dieses wird aus Titan oder Hochleistungskeramik gefertigt. Die dazu passende Krone wird mit zahntechnischen und computertechnischen Schritten hergestellt.

Das Cerec CAD/CAM System (Sirona Dental Systems, Bensheim, Deutschland), eignet sich zur Versorgung von Zähnen mit Vollkronen aus Keramik (Mörmann et al., ISBN 3-9521752-1-8). Bei der Kronenfertigung mit Cerec werden bisher die Implantate mit Hilfe von Standardabutments aus Titan oder Keramik aufgebaut. Ungünstige Achsneigungen von Zahnimplantaten können mit gewinkelten Standardabutments ausgeglichen werden. Alternativ können die Konvergenzwinkel und der gingivale Rand von Standardabutments aus Hochleistungskeramik (wie z.B. ZiReal von Implant Innovations Inc.) durch manuelles Beschleifen angepasst werden. Abutments mit geeigneter Stumpfrichtung und genügendem Konvergenzwinkel können sowohl mit der Cerec-3D Mundkamera als auch nach Abformung und Modellherstellung mit der Laserabtastung im Cerec inLabgerät aufgenommen werden. Die Konstruktion und Fertigung der Krone erfolgt dann auf dem Stumpf mit bekannten Schritten wie beim vitalen Zahn (Masek 2003, Int J Comp Dent 6: 75-82; W. Schneider, "Cerec 3D - A New Dimension in Treatment", Int. J. Comp. Dent 6: 57-66 (2003)). Die Kronen werden in der Cerec 3-Schleifeinheit aus Rohlingsblöcken von beschleifbarem Restaurationsmaterial (Keramik, Komposit) formgeschliffen (Mörmann & Bindl 2000, Quintessence Int 31:699-712; Mörmann & Bindl 2002, Dent Clin N Am 46: 405-426). In ähnlicher Weise erfolgt dies in anderen bekannten System zur Herstellung von dentalen Restaurationen, wie z.B. der handgesteuerten Celay-Kopiertechnik (Crispin 1996, Quintessence, Chicago, Seite 68), der DCM/Cercon Technik (Filser et al., 2001, Int. J. Comp. Dent. 4: 89 - 106), der LAVA-Technik (Sutter et al. 2001, Int. J. Comp. Dent. 4: 195 - 206), der DCS-Technik (Besimo et al. 2001, Int. J. Comp. Dent. 4: 243 - 262), der GN-1 Technik (Hikita et al. 2002, Int. J. Comp. Dent. 5: 11 - 23). In jedem Fall verlangt die CAD/CAM Fertigung von Implantatkronen entsprechend der konventionellen Verfahrensweise die Herstellung eines achsengerechten Abutments, mit dem nachfolgenden Einsetzen und Befestigen der Krone.

In dem Bemühen, die Kronenversorgung von Zahnimplantaten zu vereinfachen, wurde vorgeschlagen, Implantatfixturen in Materialblöcken auszuformen und Abutments sowie Kronen mit Hilfe der CAD/CAM-Technologie (Abutments) herzustellen (De Luca 1999, EP 1 023 876 A2). Aus dieser Offenbarung ist ein Rohling nach dem Oberbegriff des Anspruchs 1 bekannt. Diese Lösung ist jedoch nicht ohne apparative Modifikationen bei herkömmlichen Bearbeitungssystemen z.B. der Cerec-Klasse einsetzbar.

WO 01/80768 beschreibt einen Rohling, welcher einen zu bearbeitenden Block sowie einen über die implantatseitige Oberfläche des Blocks herausstehenden Anschlusszapfen aufweist.

### Darstellung der Erfindung

Die Versorgung von Zahnimplantaten mit Abutment-Vollkronen stellt eine anspruchsvolle und zeitraubende Arbeit dar, die mit der vorliegenden Erfindung vorzugsweise in der direkten Anwendung in der Praxis, in einer Patientensitzung durch den Zahnarzt ohne zahntechnische Zwischenschritte vereinfacht und verkürzt werden soll.

Diese Aufgabe wird von der in den unabhängigen Ansprüchen definierten Erfindung gelöst.

Bei allen Ausführungen der Erfindung ist am Block ein subgingival-anatomisches Implantat-Anschlussteil angeordnet, in welchem eine Implantat-Fixtur zur Befestigung an einem Implantatkopf ausgeformt ist. Der Implantat-Anschlussteil besitzt einen über eine implantatseitige Oberfläche des Blocks herausstehenden subgingivalen Abschnitt. Dieser ist dazu vorgesehen, den durch eine Heilungskappe zwischen Gingivarand und Implantatschulter geformten subgingivalen Bereich mindestens teilweise auszufüllen und die aus dem Block spanabhebend ausgearbeitete Zahnrestauration abzustützen. Dank dem subgingivalen Abschnitt braucht der Block in diesem Bereich nicht bearbeitet zu werden, wodurch die Bearbeitungszeit und der Werkzeugverschleiss reduziert werden.

Weiter verjüngt sich der subgingivale Abschnitt gegen den Sitz der Implantat-Fixtur hin, und besitzt so eine anatomisch angepasste Form, an welche sich die Gingiva anpassen kann. Mit anderen Worten ist der Querschnitt des subgingivalen Abschnitts auf der Höhe der Oberfläche des Blocks grösser als auf der Höhe des Sitzes für den Implantatkopf.

Vorzugsweise nimmt dabei der Querschnitt des subgingivalen Abschnitts gegen den Sitz hin stetig und monoton ab. Der Begriff "monoton" ist dabei in mathematischem Sinne auszulegen, d.h. der Querschnitt nimmt mit zunehmender Tiefe ab oder bleibt, über gewisse Unterbereiche (z.B. über den weiter unten erwähnten zweiten Unterabschnitt), konstant. Der Begriff "stetig" ist ebenfalls im mathematischen Sinne zu verstehen und impliziert, dass sich die Querschnittfläche nicht sprungweise ändern soll, da die bei einer sprungweisen Änderungen der Querschnittfläche entstehenden Kanten eine Reizung der Gingiva verursachen können.

Insbesondere in dem an die Oberfläche des Blocks anschliessenden Bereich des subgingivalen Abschnitts sollte dessen Querschnittsfläche streng monoton abnehmen, d.h. mit zunehmendem Abstand von der Oberfläche kleiner werden, so dass der subgingivale Abschnitt sich gegen den Block hin aufweitende Aussenflächen besitzt. So geformte Oberflächen können ohne grosse Winkeländerung in die sich in diesem Bereich ebenfalls aufweitenden Aussenflächen der Zahnrestauration übergehen.

In einem weiteren Aspekt der Erfindung ist die Aussenfläche des über die Oberfläche des Blocks herausstehenden subgingivalen Abschnitt vorpoliert.

Dies ist im Gegensatz zu Lösungen zu sehen, bei welchen der an den Sitz der Implantat-Fixtur angrenzende Bereich spanabhebend bearbeitet wird. Die spanabhebende Bearbeitung von Keramik erfolgt mit Diamant belegten Instrumenten mit Diamantkorn D 64 (bzw. D 126) und hinterlässt rauhe Oberflächen, mit Ra-Werten (D 64) von 1.2-1.6 (Féher & Mörmann; Schweiz Mschr Zahnmed 105: 474-479 (1995). Subgingivale rauhe Oberflächen dieser Art sind nachweislich entzündungsfördernd und damit krankheitserregend (Mörmann et al.: J Clin Periodontol 1,120-125 (1975). Rauhe Oberflächen sind deshalb vor dem Einsetzen auf das Implantat bzw. dem Kontakt mit dem Gingivagewebe, vom Zahntechniker glatt zu polieren bzw. zu glasieren mit einer Oberflächenrauigkeit, die der einer Maschinenpolitur äquivalent ist (Ra 0.05±0.01) (Féher & Mörmann; Schweiz Mschr Zahnmed 105: 474-479 (1995) und die als gingivafreundlich bezeichnet werden kann. Anspruchsgemäss wird dieses Problem vermieden durch die Kombination von zwei Elementen, nämlich 1. dem spanabhebend zu bearbeitenden Kronenrohling und 2. dem nicht zu bearbeitenden subgingivalen Abschnitt mit vorpolierter, d.h. glatter, gingivafreundlicher Oberfläche. Vorzugsweise besitzt die Oberfläche einen Ra-Wert kleiner 0.1, insbesondere im Bereich von Ra=0.05 ± 0.01.

Das subgingival-anatomische Implantat-Anschlussstück ist mit dem Rohlingsblock vorzugsweise formschlüssig verbunden. Die Steuerungssoftware für die spanabhebende Bearbeitung berücksichtigt die Grenze zwischen diesen beiden Elementen.

In einem weiteren Aspekt der Erfindung steht der subgignivale Abschnitt um mindestens 1.5 mm, vorzugsweise mindestens 2 mm, über die Oberfläche des Blocks heraus. Es zeigt sich, dass eine individuelle spanabhebende Bearbeitung der Zahnrestauration in einem Bereich von mindestens 1.5 mm (in der Regel sogar von mindestens 2.0 mm) ab Implantatkopf nicht notwendig ist.

Vorzugsweise weist der subgingivale Abschnitt keine Ecken und Kanten auf, wodurch die Gefahr einer Reizung der Gingiva reduziert werden kann.

Vorzugsweise wird der Block an mindestens einer halterseitigen Oberfläche an einem Halter bzw. der Bearbeitungsvorrichtung befestigt. Die halterseitige Oberfläche steht senkrecht oder zumindest quer zur implantatseitigen Oberfläche des Blocks. Somit kann die implantatseitige Oberfläche (und die der implantatseitigen Oberfläche gegenüberliegende Fläche) zumindest in einem mittleren Bereich für die Bearbeitungsinstrumente frei zugänglich bleiben. Dies erlaubt es, die durch die Implantatachse festgelegte okklusale-gingivale Schraubenkanalachse der herzustellenden Krone parallel zur halterseitigen Oberfläche bzw. senkrecht zur Achse des Halters zu orientieren, wie dies auch bei der Bearbeitung konventioneller Rohlingsblöcke der Fall ist.

Das subgingival-anatomische Implantat-Anschlussteil erlaubt es z.B. dem Zahnarzt in der Praxis, Vollkronen direkt, in einem Zuge am Patienten, ohne aufwendige zahntechnische Zwischenschritte, unter Verzicht auf die Herstellung und Montage eines Abutments, auf den Kopf des inkorporierten Zahnimplantates zu konstruieren, in dentalen CAD/CAM Geräten bzw. dentalen Kopierbearbeitungsgeräten formzuschleifen, während der Patient wartet, und im Mund lagegerecht direkt mit der Fixtur des Zahnimplantates zu befestigen.

Die Daten zum Formschleifen der Krone können beispielsweise durch optische Messung auf dem freiliegenden Kopf des Zahnimplantats bzw. optische Messung eines auf das Implantat aufgesetzten Messabutments direkt im Mund des Patienten (z.B. mit der CEREC-Kamera) gewonnenen werden oder durch Laserabtastung eines zahntechnisch hergestellten Scan-Modells dieser Situation (z.B. in den CEREC inLab, DCS oder GN-1-Verfahren). Im zweiten Fall kann mit Hilfe eines Messabutments ein stellvertretendes Implantat situationsgenau platziert werden. Auf dieses wird ein stellvertretendes subgingival-anatomisches Implantat-Anschlussteil befestigt und die Krone situationsgerecht aufgewachst. Die aufgewachste Krone wird dann mit Hilfe der bekannten Lasertriangulation (DCM-Cercon, Lava, DCS, GN-1, CEREC inLab) samt dem subgingival-anatomischen Implantat-Anschlussteil räumlich abgetastet. Das Implantat-Anschlussteil dient dabei als Referenz für die Orientierung des Datensatzes im Rohlingsblock. Sodann wird ein Rohlingsblock mit dem subgingival-anatomischen Implantat-Anschlussteil entsprechend diesen Daten formgeschliffen.

Vorzugsweise besteht der Implantat-Anschlussteil 14 aus einem anderen Material als der Block 10, z.B. aus einem Material mit höherer Bruchfestigkeit, so dass Block 10 und Anschlussteil 14 je an die unterschiedlichen Anforderungen, denen sie gerecht werden müssen, angepasst werden können.

Denkbar ist jedoch auch, dass der Implantat-Anschlussteil und der Block aus dem gleichen Material bestehen und insbesondere einstückig ausgestaltet sind. In diesem Fall sollte ein Material mit hoher höherer Bruchfestigkeit verwendet werden. Der Implantat-Anschlussteil sollte auch hier die oben erwähnte glatte Oberfläche aufweisen, die nicht spanabhebend bearbeitet werden muss. Besonders vorteilhaft ist in diesem Zusammenhang Glaskeramik, insbesondere Lithiumsilikat-Keramik, oder ein anderes Material, dem nach der mechanischen Bearbeitung im CEREC-Gerät durch Nachbehandlung, insbesondere Tempern, d.h. Behandeln bei erhöhter Temperatur, eine höhere Festigkeit verliehen werden kann.

Die Erfindung betrifft auch einen Teilesatz zur Herstellung einer Zahnrestauration, und zwar einer Zahnkrone, mit mindestens einem Rohling dieser Art.

Vorzugsweise wird die Position des Implantat-Anschlussteils ausgemessen und der Rohling so bearbeitet, dass die vorgegebene Restaurationsoberfläche relativ zur Position des Implantat-Anschlussteils gebildet wird. Durch diese Schritte wird sichergestellt, dass die Restaurationsoberfläche die korrekte Position zum Implantat-Anschlussteil und somit zum Implantat besitzt.

### Kurze Beschreibung der Zeichnungen

Weitere Vorteile und Anwendungen der Erfindung ergeben sich aus der nun folgenden Beschreibung anhand der Figuren. Dabei zeigen:
Fig. 1 die Seitenansicht einer Zahnreihe mit einem zu ersetzenden Zahn,
Fig. 2 eine Ansicht der Zahnreihe von Fig. 1 von oben,
Fig. 3 die Zahnreihe von Fig. 1 mit Messabutment,
Fig. 4 die Zahnreihe von Fig. 3 von oben,
Fig. 5 einen Schnitt durch einen Rohling mit Halter,
Fig. 6 eine Ansicht des Rohlings von Fig. 5 von der Seite der Fixtur gesehen,
Fig. 7 den Rohling von Fig. 5 mit Referenzteil,
Fig. 8 den Rohling von Fig. 7 von der Seite des Referenzteils gesehen,
Fig. 9 die restaurierte Zahnreihe,
Fig. 10 eine zweite Ausführung eines Rohlings
Fig. 11 ein zahntechnisch erstelltes Modell mit Aufwachs-Abutment, wobei letzteres im Schnitt dargestellt ist und
Fig. 12 eine Detailschnitt durch den Rohling im Bereich des Implantant-Anschlussteils.

### Wege zur Ausführung der Erfindung

Im Folgenden wird eine Ausführung der Erfindung an einem Beispiel beschrieben. Dabei handelt es sich um die Restauration eines Backenzahns mit einer Krone.

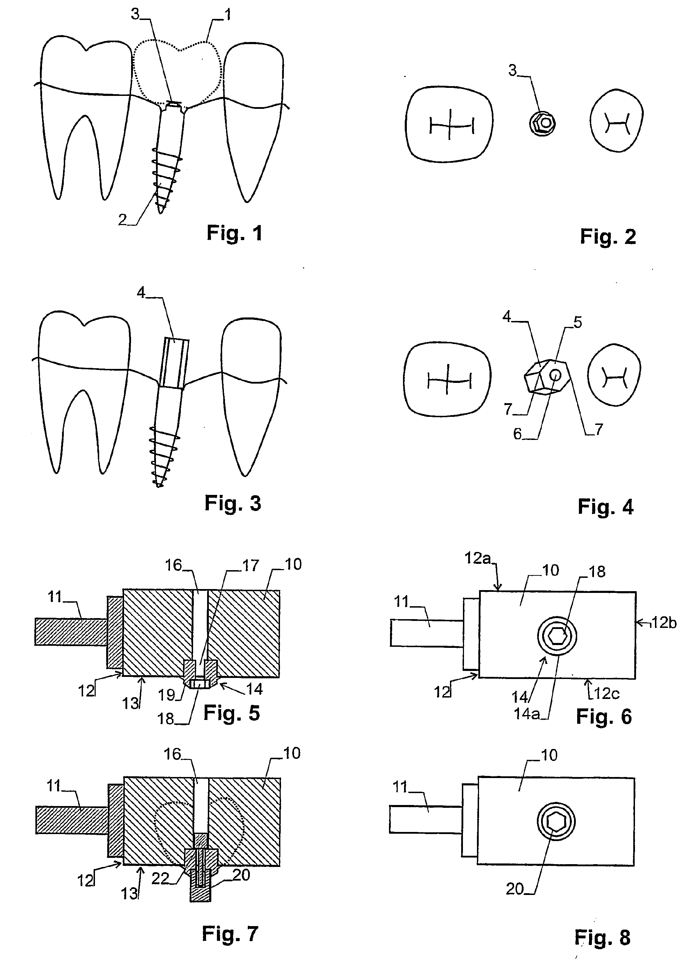

Fig. 1 und 2 zeigen eine Zahnreihe mit fehlendem Backenzahn 1 (Schaltlücke), an dessen Position ein Zahnimplantat 2 im Kieferknochen verankert wurde. Der Implantatkopf 3 des Zahnimplantats 2 ist in bekannter Weise mit einem polygonalen Profil und einem Innengewinde versehen, die eine Fixtur bilden und zur Befestigung der Restauration (Krone) dienen.

Die Situation des freiliegenden Implantatkopfes 3 wird dreidimensional vermessen. Hierzu wird die dreidimensionale Lage und Position des Implantatkopfes analog zur Zahntechnik unter Verwendung eines Hilfskörpers, im folgenden "Messabutment" 4 genannt, erfasst, wie es in Fig. 3 und 4 dargestellt ist. Das Messabutment 4 passt exakt auf die Fixtur des Implantatkopfes 3, und wird auf diesen zum exakten Sitz aufgeschraubt, so dass er in vorgegebener Lage zum Implantatkopf 3 steht. Das Messabutment 4 verlängert das intraossär liegende Zahnimplantat 2 in seiner Achsrichtung in den Bereich der klinischen Zahnkrone. Es besitzt prismatische Form mit vorzugsweise hexagonalem oder oktagonalem Querschnitt, je nach Fixturgeometrie. Seine Seitenflächen enden okklusal in einer Fläche 5, welche durch eine Bohrung 6 für die zentrale Befestigungsschraube unterbrochen wird. Die okklusale Fläche 5 des Messabutments 4 repräsentiert die räumliche Form und Lage des Implantatkopfes im gingivozervikalen Bereich mit dem Abstand, der durch die Höhe des Messabutments 4 definiert wird. Sie informiert auch über die Winkelabweichung der Fixtur des Implantats gegenüber der Kauflächen- (Okklusions) Ebene. Das Messabutment 4 besitzt für die optisch-dreidimensionale Messtechnik geeignete opake Oberflächen und liegt mit der okklusalen Fläche im Fokus- und Messbereich des Messsystems. Bei der oralen optisch-dreidimensionalen Vermessung mit der Cerec-3D Mundkamera werden Gingiva und Nachbarzähne mit einem opaken Puder bzw. Spray eingedeckt.

Nebst der Messung der Position und Lage des Implantates 2 werden auch die Grösse und Form der Zahnlükke sowie die Lage der Nachbarzähne in bekannter Weise ausgemessen.

Die Ermittlung der Kronenform erfolgt beispielsweise mit der Software des oben erwähnten CEREC-Systems, welche die das Verfahren kennzeichnenden Modifikationen enthält. Dabei wird die vom Messsystem aufgenommene Situation am Bildschirm dargestellt und der Benutzer markiert relevante Punkte und Linien. Ausgangspunkt ist die gemessene und abgespeicherte Form, Position und Lage des Implantatkopfes 3. Der Benutzer identifiziert in einem ersten Schritt im virtuellen Modell des Zahn- bzw. Kieferbereichs den äusseren Rand der okklusalen hexa- oder oktagonalen Fläche 5 des Messabutments 4 mit einer Linie und zusätzlich die der mesio-distalen Zahnreihenachse nächstliegenden mesialen und distalen Ecken 7 durch Punkteingaben. Die gerade Verbindungslinie dieser Punkte 7 durch den Mittelpunkt markiert die Winkellage der Implantatfixtur bezüglich der mesio-distalen Zahnreihenachse. Das System erfährt durch diese Eingaben die Winkelabweichung der Implantatfixtur gegenüber der mesiodistalen Zahnreihenachse sowie seine mesio-distale und oro-bukkale Raumorientierung. Die mesio-distale Zahnreihenachse stellt zusammen mit der Okklusionsebene die Hauptachse für die Konstruktion der Krone dar. Die gespeicherten räumlichen Daten des Implantatkopfes werden mit Hilfe der räumlichen Identifikation durch das Messabutment im dreidimensionalen Datenmodell der gingivozervikalen Lage zugeordnet.

Zum Ermitteln der Kronenform wird im ersten Schritt die äussere Zirkumferenz des Implantatkopfes 3 mit der Eingabe einer zirkulär geschlossenen Bodenlinie markiert und das Implantant-Anschlussteil 14 mit seiner räumlich orientierten Umrisslinie 14a, welche es auf der implantatseitigen Fläche des Rohlingsblockes bildet. Diese wird für die Konstruktion der Krone als Basislinie auf dem Datenmodell dargestellt. Im zweiten Schritt wird die zervikale Kronenumrisslinie dem Verlauf des Gingivarandes folgend eingegeben. Die Höhendaten der Bodenlinie werden aus dem Höhenverlauf der Gingiva übernommen. Die Linie ist editierbar. Zwischen dem äusseren Rand des Implantatkopfes 3 und der gingival-zervikalen Kronenumrisslinie werden die subgingivalen Oberflächen der Krone generiert, wobei die implantatnahe Oberfläche die implantattypische Oberflächengestalt des vorgesehenen subgingival-anatomischen Implantat-Anschlussteils aus einer Datenbank implantat-typischer Anschlussteile übernimmt. Auf den gingivalen Rand der Krone wird eine virtuelle Krone des zutreffenden Zahntyps aus einer Zahndatenbank angepasst, oder es wird ein Registrat der Situation vor Zahnverlust verwendet. Das Emergenzprofil der bukkalen, lingualen und approximalen Kronenoberflächen kann im Bereich der zervikalen Kronenumrisslinie mit einem koronalen Austrittswinkel bestimmt werden. Die mesio-distale, approximale und okklusale Ausrichtung und Anpassung der Kronenform erfolgt mit den Werkzeugen der verfügbaren Kronensoftware. Für das maschinelle Formschleifen der Implantatkrone werden die Konstruktionsdaten in Schleifdaten umgewandelt.

Sodann wird ein Rohling bearbeitet, wie er in Fig. 5 und 6 dargestellt ist. Dieser besitzt einen Rohlingsblock bzw. Block 10, der beispielsweise aus einem keramischen Material oder Komposit besteht, und einen Halter 11, der zur Halterung in einem computergesteuerten Bearbeitungswerkzeug dient. Der Halter 11 ist mit einer halterseitigen Oberfläche 12 des Blocks 10 verbunden, z.B. durch Kleben. Rohlinge dieser Art sind z.B. aus US 4 615 678 bekannt.

An einer zweiten Oberfläche 13, die im Folgenden als implantatseitige Oberfläche bezeichnet wird und die rechtwinklig zur halterseitigen Oberfläche 12 des Blocks 10 steht, ist genau ein subgingival-anatomisches Implantat-Anschlussteil 14 angeordnet. Es handelt sich dabei um ein implantatspezifisches Präzisionsteil aus Material mit hoher Bruchfestigkeit, welches einen präzisen Sitz der Krone auf dem Implantatkopf 3 gewährleistet und die feste Verschraubung mit diesem erlaubt. Das subgingival-anatomische Implantat-Anschlussteil 14 ist fest mit dem Block 10 verbunden. Der Block 10 weist einen zentralen Kanal 16 auf, der sich vom subgingival-anatomischen Implantat-Anschlussteil 14 quer durch den Block 10 erstreckt. Der Kanal 16 verläuft durch die Mitte des Blocks 10 und parallel zur halterseitigen Oberfläche 12. Er nimmt eine Befestigungsschraube 12 auf und ermöglicht den Zugang zur Schraube 12 mittels Schraubenzieher, so dass der Anschlussteil 14 samt formgeschliffener Krone mit dem Implantat verschraubt werden kann. Der subgingival-anatomische Implantat-Anschlussteil 14 ist mit seiner Umfangsebene planparallel zur implantatseitigen Oberfläche 13 des Blocks 10 angeordnet. Die Anordnung der Fixturgeometrie des Anschlussteiles 14 befindet sich gegenüber der Geometrie des Blocks 10 in einer standardisierten Anordnung.

Der Implantat-Anschlussteil 14 besteht z.B. aus Metall oder einer bruchfesten Keramik, da er hohe Kräfte aufnehmen muss. Er ist teilweise im Block 10 versenkt und steht, wie dargestellt, in einem subgingivalen Abschnitt 19 teilweise über die Oberfläche 13 heraus. Wie eingangs erwähnt, muss bei einer derartigen Konstruktion beim Formschleifen der Zahnrestauration weniger Material abgetragen werden.

Der subgingival-anatomische Implantat-Anschlussteil 14 besitzt eine achsiale Öffnung 17 für den Schaft der Befestigungsschraube 12 und einen als Fixtur dienenden polygonalen (rotationsverhindernden) Sitz 18, welcher der Form des Implantatkopfs 3 angepasst ist.

Für das Formschleifen der Krone im Bearbeitungswerkzeug ist die Identifikation der Lage des subgingival-anatomischen Implantat-Anschlussteiles 14 im Block 10 wichtig. Dies geschieht mit Hilfe eines Referenzteils 20 in Form eines Materialkörpers, wie er in Fig. 7 und 8 dargestellt ist. Der Referenzteil 20 wird mit dem subgingival-anatomischen Implantat-Anschlussteil 14 verbunden und vom Bearbeitungswerkzeug direkt zur Identifikation seiner Position angefahren. Die Form und Grösse des Referenzteils 20 ist in der Maschine gespeichert. Die Identifikation geschieht z.B. durch Touchierungen auf gegenüberliegenden achsialen Seiten und auf der Endfläche oder durch optische Abtastung. Wenn der Implantat-Anschlussteil 14 ausreichend weit über die implantatseitige Fläche 13 des Blocks 10 vorsteht, kann dessen Position unter Umständen auch ohne einen speziellen Referenzteil direkt ausgemessen werden. Es ist auch möglich, die Position des Kanals 16 auszumessen. Ist die Position des Implantat-Anschlussteils relativ zum Halter 11 genau bekannt, so genügt unter Umständen eine Ausmessung der Position des Halters.

Die aus dem Block 10 zu schleifende Kronenkonstruktion wird gemäss ihrer Anbindung an das Implantat-Anschlussteil 14 im Block 10 orientiert. Bei Kippungen des Implantatkopfes 3 gegenüber der Okklusionsebene wird, wie weiter unten genauer beschrieben wird, die gesamte Kronenkonstruktion gemäss diesen im Rohlingsblock ausgerichtet. Ebenso muss die Kronenkonstruktion entsprechend der Drehposition des Sitzes gegenüber dem Block 10 mehr oder weniger gedreht werden - im Falle eines hexagonalen Sitzes 18 um höchstens +/- 30°.

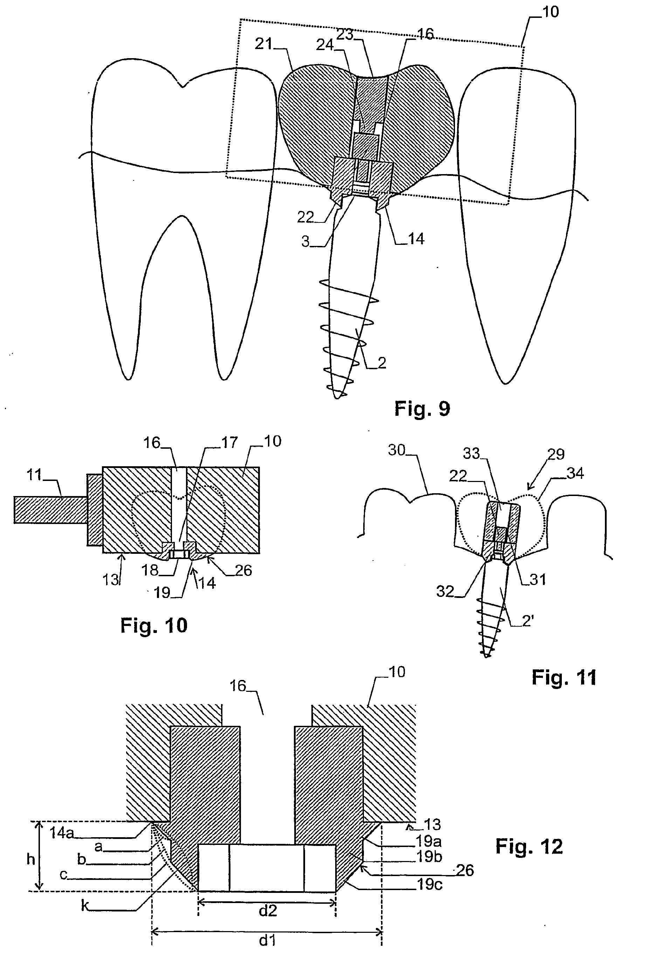

Nach der Konstruktion wird in an sich bekannter Weise eine Krone 21 formgeschliffen. Diese kann, wie in Fig. 9 dargestellt, sodann auf dem Implantatkopf 3 befestigt werden, indem die Befestigungsschraube 22 in den Kanal 16 eingeführt und im Implantat 2 verschraubt wird. Sodann wird der Kanal 16, der z.B. einen Durchmesser von 2.5 mm besitzt, verschlossen. Hierzu kann plastisches Zahnrestaurationsmaterial oder ein Verschlusszapfen 23 verwendet werden. Letzterer besteht vorzugsweise aus dem gleichen Material wie Block 10, ist in seinem Durchmesser dem Kanal 16 angepasst und wird im Kanal 16 eingeklebt und an der okklusalen Oberfläche abgeschliffen. Wird ein Verschlusszapfen 23 verwendet, so reicht dieser in seiner vollen Dicke vorzugsweise nicht ganz bis zur Befestigungsschraube 22, damit die Befestigungsschraube nötigenfalls später ohne Beschädigung wieder freigelegt werden kann. In einer bevorzugten Ausführung ist an der Spitze des Verschlusszapfens 23 ein Abstandselement 24 angeordnet, das aus einem anderen Material (z.B. Silikon) als der Verschlusszapfen 23 besteht und/oder eine kleinere Querschnittsfläche als der Verschlusszapfen 23 aufweist. Wird der Verschlusszapfen herausgebohrt, so kann das Abstandselement 24 ohne mechanische Beschädigung der Schraube herausgelöst werden.

Als Material für den Block 10 ist Glaskeramik besonders geeignet, insbesondere eine Lithiumsilikat-Keramik oder ein anderes Material, beispielsweise Komposit, Feldspatkeramik oder Leuzitglaskeramik.

Bei Verwendung eines ausreichend festen Materials für den Block 10 kann der Implantat-Anschlussteil 14 aus dem gleichen Material wie der Block 10 bestehen und ist vorzugsweise einstückig aus diesem ausgeformt.

Bevorzugt wird der Implantat-Anschlussteil 14 jedoch separat gefertigt, so dass er ohne grossen Aufwand in der nötigen Genauigkeit hergestellt werden kann. Insbesondere wenn der subgingival-anatomische Implantat-Anschlussteil 14 aus Metall ist, kann er in einfacher Weise präzis gefertigt werden und weist dennoch die nötige Bruchfestigkeit auf. Nach seiner Herstellung wird der Implantat-Anschlussteil 14 permanent im Block 10 verankert.

Der der Gingiva anliegende subgingivale Abschnitt 19 des Implantat-Anschlussteils 14 besteht vorzugsweise aus drei Unterabschnitten 19a, 19b bzw. 19c, wie dies in Fig. 12 dargestellt ist. Der erste Unterabschnitt 19a schliesst an die Oberfläche 13 an, der zweite Unterabschnitt 19b an den ersten Unterabschnitt 19a und der dritte Unterabschnitt 19c an den zweiten Unterabschnitt 19b.

Der dritte Unterabschnitt 19c ist konisch und sitzt auf der Implantatschulter auf. Der zweite Abschnitt 19b ist zylindrisch. Der erste Unterabschnitt 19a ist wiederum konisch. Die Höhe dieser einzelnen Unterabschnitte kann zwischen 0.5 und 2.0 mm betragen, der zweite Unterabschnitt kann bis 4 mm hoch sein. Der grösste Durchmesser des dritten Unterabschnitts 19c bzw. der Durchmesser des zweiten Unterabschnitts 19b ist 0.5 bis 2 mm grösser als der Durchmesser d2 der Implantatschulter. Der grösste Durchmesser d1 des ersten Unterabschnitts 19a ist 1 bis 4 mm grösser als der Durchmesser der Implantatschulter.

Die drei Unterabschnitte 19a, 19b und 19c können kreisrunden Querschnitt besitzen. Insbesondere der erste Unterabschnitt 19a kann aber in Abweichung von der Kreisform für die Fertigung von Molarenkronen mesiodistal länglich bzw. elliptisch mit einem Längsdurchmesser bis zu 12 mm und einem oral-bukkalen Querdurchmesser, der mindestens dem Durchmesser des zweiten Unterabschnitts bzw. dem Durchmesser der Implantatschulter entspricht, gestaltet sein. Er kann in dieser Gestaltung bei Verwendung eines hochfesten Materials als Stützelement für das supragingivale die individuelle Krone bildende Material dienen. Für die Versorgung von Prämolaren kann der erste Unterabschnitt 19a ebenfalls länglich und quer zur mesiodistalen Zahnreihenachse oral-bukkal orientiert sein, mit einem Durchmesser bis zu 8mm und mit dem minimalen mesiodistalen Durchmesser des Distanzteils, um den anatomisch geringen mesiodistalen Querschnitt der Prämolaren zu berücksichtigen.

Der dritte Unterabschnitt 19c und der zweite Unterabschnitt 19b können bezüglich ihrer Aussenkontur vertauscht sein, womit eine kelchartige Aussenform (siehe Linie k in Fig. 12) des gingivalen Abschnitts 19 entsteht. In diesem Fall können der erste und der zweite Unterabschnitt 19a und 19b auch praktisch ununterscheidbar nebeneinander liegen und einen einzigen, sich gegen die implantatseitige Oberfläche hin aufweitenden Körper bilden.

Die in Fig. 12 eingezeichneten Aussenkontourlinien a, b, c zeigen weitere zur anatomischen Anpassung mögliche Konturen der Aussenform des Abschnitts 19 an. Bei der vorzugsweisen anatomisch orientierten Gestaltung der Aussenkontur des Implantat-Anschlussteiles gehen die Erweiterungsteile 1 und 2 und der Distanzteil ohne Winkel und Ecken ineinander über.

Die Fügeverhältnissse des subgingival-anatomischen Implantat-Anschlussteils 13 zum Implantat richten sich nach den Formen bekannter verschraubbarer Implantatanschlussformen für Abutments aller Art z.B. Hex Abutments bzw. ZiReal Pfosten der Firmen 3i Implant Innovations (Schweiz) oder wie bei synocta Meso-Fräszylindern der Firma Straumann (Schweiz).

Der maximale Durchmesser d1 des subgingivalen Abschnitts 19 kann zwischen 3.8 und 8.0 mm liegen, mit von der Implantatschulter nach okklusal konisch mit Winkeln zwischen 40° und 70° sich öffnenden zirkulär kontinuierlichen bzw. facettierten Aussenflächen.

Die von der Implantatschulter aufsteigenden Konusflächen können aber auch in ähnlichen Dimensionen zum Gingivarand hin und bis zum Eintritt in den zur Bearbeitung bestimmten Rohlingsblock (1) sphärisch konvex gestaltet sein.

Der subgingivale Abschnitt 19 kann zwischen 0.5 und 8 mm, vorzugsweise mindestens 1.5 oder 2 mm, aus dem Rohlingsblock 1 herausragen und zwischen 1 und 8 mm in den Rohlingsblock 1 hineinragen.

Der subgingival-anatomische Implantat-Anschlussteil 14 kann aus dem gleichen Material (Keramik, Komposit) wie der spanabhebend zu bearbeitende Rohlingsblock oder aus einer Hochleistungskeramik bzw. aus einem anderen geeigneten Material z. B. aus Metall oder Kombinationen von Keramik und Metall bestehen. Besteht er aus Hochleistungskeramik bzw. einer hochfesten Glaskeramik oder aus Metall, so kann er als unterhalb des Gingivarandes liegendes Stützelement für die aus der Rohlingskeramik gefertigte Zahnkrone ausgebildet sein. Bestehen Rohlingsblock und Implantatanschlussteil aus zwei oder mehreren Stücken, so werden diese mittels Klebeverbund mit Hilfe von biologisch bewährten Adhäsiven, mittels Verbundglas, durch Sintern oder durch andere mechanisch und biologisch geeignete Verbundtechniken miteinander verbunden.

Der subgingivale Abschnitt 19 des Anschlussteils 14 des in Fig. 5 - 8 dargestellten Rohlings 10 bildet einen biologisch und funktionell wesentlichen Teil der gingiva-seitigen Oberfläche der fertigen Krone.

Wie in Fig. 10 dargestellt, kann der subgingivale Abschnitt 19 auch eine noch grössere gingivaseitige Basisplatte der Krone bilden, und er kann auch eine konvex nach aussen gekrümmte Aussenfläche 26 besitzen.

Bei der Anwendung des erfindungsgemässen Systems wird vor dem Einsetzen der Krone eine die Gingiva formende Heilungskappe (Heilungs-Abutment) auf das Implantat aufgesetzt, das eine Form entsprechend der Aussenfläche 26 besitzt und während dem Heilungsprozess diese Form der Gingiva aufprägt. Sodann wird die Heilungskappe entfernt und die Krone wird eingesetzt. Dabei schmiegt sich die Gingiva der Aussenfläche 26 an.

In dem zu Fig. 3 und 4 beschriebenen Ausführungsbeispiel der Erfindung wurden die Formdaten für die zu schaffende Zahnkrone durch Messung im Mund des Patienten ermittelt. Die Erfindung ist jedoch auch geeignet zur Anwendung im zahntechnischen Labor. Hierzu kann z.B. zuerst ein konventioneller Abdruck der zu restaurierenden Zahnreihe des Patienten genommen und hieraus durch Formguss ein Modell 30 geschaffen werden, wie es in Fig. 11 dargestellt ist. Dabei wird in konventioneller Weise ein Messabutment in den Abdruck aufgenommen und damit ein entsprechendes Implantat 2' im Modell 30 positioniert. Das so erstellte Modell 30 gibt im wesentlichen die Situation nach Fig. 1 und 2 wieder.

Aus dem Modell 30 können sodann die Formdaten für das Formschleifen des Blocks 10 gewonnen werden. In einer möglichen Ausführung wird zu diesem Zweck ein Aufwachs-Abutment 29 bereitgestellt, welches einen Körper 31 z.B. aus Wachs oder einem anderen, mit Wachs gut verbindbaren Material aufweist, sowie - ähnlich dem Rohling - einen subgingival-anatomischen Implantat-Anschlussteil 32. Letzterer passt auf das Implantat 2' und kann mit einer Schraube 22 in diesem fixiert werden. Zum Einführen und Bedienen der Schraube 22 ist im Körper 31 ein Kanal 33 vorgesehen.

Der Zahntechniker befestigt sodann das Aufwachs-Abutment 29 am Implantat 2' des Modells 30 und wachst in an sich bekannter Weise eine Zahnkrone 34 auf (oder passt eine Prüfform an), die die Form des zu restaurierenden Zahns besitzt. Sodann wird die Zahnkrone 34 durch Lösen der Schraube 22 aus dem Modell 30 entfernt und in ein optisches oder mechanisches Abtastgerät eingesetzt, wo ihre Form aufgenommen wird. Dabei wird insbesondere auch die Position des Kanals 33 und des subgingival-anatomischen Implantat-Anschlussteils 32 gemessen. Die so gewonnenen Daten können, wie im oben beschriebenen Verfahren, zum Formschleifen des Blocks 10 verwendet werden.

Im System nach EP 1 062 916 weisen die Integralteile (24) eine Durchgangsbohrung (19) auf. Diese Bohrung ist senkrecht zur Breitfläche der Platte orientiert. In dieser Form ist das entstehende Integralteil als Kronen-Zahnersatz nur für Implantate geeignet, die völlig achsparallel zu den Nachbarzähnen stehen. Zur Anpassung an gegenüber der Kaufläche bzw. Okklusionsebene anders als 90° orientierte Implantate ist dieses, die komplette Aussenform des Zahnes gestaltende "Integralteil" nicht geeignet.

Dieser Nachteil wird in der hier vorgeschlagenen Lösung überwunden, indem bei der CAD-Konstruktion der Krone die Okklusalfläche der Zahnkrone gegenüber der benachbarten Rohlingsblockfläche entsprechend der Winkelabweichung der Implantatachse von der Okklusions-Senkrechten, gekippt wird, wie dies in Fig. 9 in Form des gekippt dargestellten Umrisses eines Rohlings 10 illustriert ist. Dadurch wird gleichzeitig auch die Durchgangsbohrung bzw. der Schraubenkanal mit dieser gleichen Neigung zur Okklusionsfläche der Zahnkrone angeordnet. Dies hat zur Folge, dass der Schraubenkanal in der formgeschliffenen Krone nicht im Zentrum der Kaufläche, sondern je nach Winkelorientierung bis zu ca. 20° ausserhalb des Zentrums der Kaufläche austritt. Erste Untersuchungen zeigen, dass dieses Verfahren für die Ästhetik und die Stabilität der Krone bei dem entsprechenden Verschluss des Schraubenkanals unerheblich ist. Eine erfindungsgemäss hergestellte Krone kann Abweichungen der Winkelorientierung von der Okklusions-Senkrechten in Schaltlücken bis zu ca. 20° kompensieren und kann geometrisch hinderungsfrei auf den Implantatkopf gesetzt werden. Der konventionelle Winkelausgleich mit der aufeinander folgenden, getrennten Herstellung von Abutment und Krone erübrigt sich.

Die Rohlinge gemäss Fig. 5 - 8 und 10 sind mit einem Halter 11 versehen, mit welchem sie in einem Bearbeitungswerkzeug befestigt werden können. Es gibt jedoch auch Bearbeitungswerkzeuge, in denen der Block 10 ohne Halter 11 eingespannt werden kann. Für derartige Bearbeitungswerkzeuge können die Blöcke 10 ohne Halter 11 angeboten werden. Beim Befestigen des Blocks 10 im Bearbeitungswerkzeug ist jedoch von Vorteil, wenn die Befestigung über eine oder mehrere Oberflächenbereiche des Blocks geschieht, die quer zur Oberfläche 13 liegen, so dass der Bereich der implantatseitigen Oberfläche um den subgingival-anatomischen Implantat-Anschlussteil 14 sowie der entsprechende Bereich auf der gegenüberliegenden Seite frei bleiben. Beispielsweise kann der Block an den Oberflächen 12, 12a, 12b und 12c (Fig. 6) in Befestigungsbacken des Bearbeitungswerkzeugs eingespannt werden. Da die implantatseitige Oberfläche 13 im Bereich des sub-gingival-anatomischen Implantat-Anschlussteils 14 sowie der entsprechende Bereich der gegenüberliegenden Seite frei bleiben, kann das Restaurat in der gewohnten Weise erstellt werden.

Um die Ausführung der Erfindung zu vereinfachen, kann dem Praktiker ein Teilesatz angeboten werden, welcher einen oder mehrere Rohlinge enthält. Zudem kann dem Teilesatz der Referenzteil 20 beigefügt sein, sowie einer oder mehrere der Verschlusszapfen 23 und/oder ein der Aussenfläche 26 angepasstes Abutment zum Formen der Gingiva während dem Heilprozess und/oder eine Auswahl der oben beschriebenen Aufwachs-Abutments 31. Der Teilesatz kann auch Schrauben und einen passenden Schraubenzieher enthalten.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Rohling zur Herstellung einer Zahnkrone mit einem Block (10) aus mechanisch bearbeitbarem, zu einer Krone formschleifbaren Material, wobei am Block (10) ein Implantat-Anschlussteil (14) angeordnet ist, in welchem eine Implantat-Fixtur mit einem Sitz (18) zur rotationsfesten Befestigung an einem Implantatkopf ausgeformt ist, **dadurch gekennzeichnet, dass** der Implantat-Anschlussteil (14) einen über eine implantatseitige Oberfläche (13) des Blocks (10) herausstehenden subgingivalen Abschnitt (19) aufweist, welcher sich gegen den Sitz (18) der Implantat-Fixtur hin verjüngt.

2. Rohling nach Anspruch 1, wobei ein Querschnitt des subgingivalen Abschnitts (19) von der Oberfläche (13) gegen den Sitz (18) hin stetig und monoton abnimmt.

3. Rohling nach einem der vorangehenden Ansprüche, wobei sich ein Durchmesser des subgingivalen Abschnitts (19) von der Oberfläche (13) gegen den Sitz (18) hin um mindestens 1 mm verjüngt.

4. Rohling nach einem der vorangehenden Ansprüche, wobei der Querschnitt des subgingivalen Abschnitt in einem an die Oberfläche (13) anschliessenden Bereich streng monoton abnimmt.

5. Rohling nach einem der vorangehenden Ansprüche, wobei der subgingivale Abschnitt (19) eine vorpolierte Aussenfläche aufweist.

6. Rohling nach einem der vorangehenden Ansprüche, wobei die Aussenfläche des subgingivalen Abschnitts eine Oberflächenrauhigkeit Ra < 0.1 aufweist.

7. Rohling nach einem der vorangehenden Ansprüche, wobei die Aussenfläche des subgingivalen Abschnitts eine Oberflächenrauhigkeit Ra von 0.5 ± 0.01 aufweist.

8. Rohling nach einem der vorangehenden Ansprüche, wobei der subgingivale Abschnitt um mindestens 1.5 mm über die Oberfläche (13) heraussteht.

9. Rohling nach Anspruch 8, wobei der subgingivalen Abschnitt (19) um mindestens 2.0 mm über die Oberfläche (13) heraussteht.

10. Rohling nach einem der vorangehenden Ansprüche, wobei der subgingivale Abschnitt einen ersten, einen zweiten und einen dritten Unterabschnitt aufweist, wobei der erste Unterabschnitt an die Oberfläche (13) angschliesst, der zweite Unterabschnitt an den ersten Unterabschnitt anschliesst und der dritte Unterabschnitt an den zweiten Unterabschnitt anschliesst, und wobei der erste Unterabschnitt (19a) sich gegen die implantatseitige Oberfläche (13) hin aufweitet und der zweite Unterabschnitt und/oder der dritte Unterabschnitt sich gegen die implantatseitige Oberfläche (13) hin aufweitet.

11. Rohling nach Anspruch 10, wobei der zweite oder der dritte Abschnitt im wesentlichen konstanten Durchmesser aufweist.

12. Rohling nach einem der Ansprüche 10 oder 11, wobei eine Höhe des ersten und des dritten Unterabschnitts zwischen 0.5 und 2 mm liegt und/oder eine Höhe des zweiten Unterabschnitts zwischen 0.5 und 4 mm.

13. Rohling nach einem der Ansprüche 10 bis 12, wobei der erste Unterabschnitt einen länglichen Querschnitt aufweist.

14. Rohling nach einem der vorangehenden Ansprüche, wobei der subgingivale Abschnitt aussenseitig keine Ecken und Kanten aufweist.

15. Rohling nach einem der vorangehenden Ansprüche, wobei der Rohling einen mit dem Block (10) verbundenen Halter (11) zum Befestigen in einem Bearbeitungswerkzeug aufweist, wobei der Halter (11) an mindestens einer halterseitigen Oberfläche (12) des Blocks (10) angeordnet ist und wobei die halterseitige (12) und die implantatseitige Oberfläche (13) im wesentlichen rechtwinklig oder quer zueinander angeordnet sind.

16. Rohling nach einem der vorangehenden Ansprüche, wobei der Typ (14) aus einem anderen Material als der Block (10) ist.

17. Rohling nach Anspruch 16, wobei der Implantat-Anschlussteil (14) eine höhere Bruchfestigkeit als der Block (10) aufweist.

18. Rohling nach einem der vorangehenden Ansprüche, wobei der Implantat-Anschlussteil (14) ein separat vom Block (10) fertigbarer, im Block (10) verankerter Teil ist.

19. Rohling nach einem der vorangehenden Ansprüche, wobei zur Aufnahme einer Befestigungsschraube zur Befestigung am Implantatkopf ein Kanal (16) vorgesehen ist, der sich vom Implantat-Anschlussteil (14) quer durch den Block (10) erstreckt.

20. Rohling nach einem der vorangehenden Ansprüche, wobei der Block (10) eine Lithiumsilikat-Keramik aufweist oder aus einer solchen besteht.

21. Rohling nach Anspruch 20, wobei der Implantat-Anschlussteil (14) einstückig mit dem Block (10) ausgeführt und ebenfalls aus der Lithiumsilikat-Keramik ist oder diese aufweist.

22. Rohling nach einem der Ansprüche 1 bis 19, wobei der Block (10) aus Komposit, Feldspatkeramik oder Leuzitglaskeramik besteht oder mindestens eines dieser Materialien aufweist.

23. Rohling nach einem der vorangehenden Ansprüche, wobei der Implantat-Anschlussteil (14) eine konvex gekrümmte, über die implantatseitige Oberfläche (13) vorstehende Aussenfläche (26) aufweist.

24. Rohling nach einem der vorangehenden Ansprüche, **dadurch gekennzeichnet, dass** er genau ein Implantat-Anschlussteil (14) besitzt.

25. Teilesatz zur Herstellung einer Zahnkrone mit mindestens einem Rohling nach einem der vorangehenden Ansprüche.

26. Teilesatz nach Anspruch 25, wobei er weiter einen Referenzteil (20) aufweist, welcher am Implantat-Anschlussteil (14) in definierter Position befestigbar ist zur mechanischen Positionsbestimmung des Implantat-Anschlussteils (14).

27. Teilesatz nach einem der Ansprüche 25 oder 26, wobei zur Aufnahme einer Befestigungsschraube zur Befestigung am Implantatkopf ein Kanal (16) vorgesehen ist, der sich vom Implantat-Anschlussteil (14) quer durch den Block (10) erstreckt, und wobei der Teilesatz weiter einen Verschlusszapfen (23) aufweist, der in den Kanal (16) einführbar und dort befestigbar ist

28. Teilesatz nach Anspruch 27, wobei an einer Spitze des Verschlusszapfens ein Abstandselement (24) angeordnet ist, welches aus einem anderen Material als der Verschlusszapfen (23) ist und/oder eine kleinere Querschnittsfläche als der Verschlusszapfen (23) aufweist.

29. Verfahren zur Herstellung einer Zahnkrone aus einem Rohling mit einem Block (10) nach einem der Ansprüche 1 bis 24, wobei der Block (10) in einem Bearbeitungswerkzeug befestigt wird und im Bearbeitungswerkzeug materialabtragend bearbeitet und zu einer Krone formgeschliffen wird, **dadurch gekennzeichnet, dass** der Block, aber nicht der Implantat-Anschlussteil im Bearbeitungswerkzeug bearbeitet wird.

30. Verfahren nach Anspruch 29, wobei der Block (10) an mindestens einer halterseitigen Oberfläche (12) mit dem Bearbeitungswerkzeug verbunden wird, wobei der Implantat-Anschlussteil (14) an einer implantatseitigen Oberfläche (13) angeordnet ist, die im quer zur halterseitigen Oberfläche (12) angeordnet ist, derart, dass die implantatseitige Oberfläche (13) zumindest in einem Bereich um den Implantat-Anschlussteil (14) frei bleibt.

31. Verfahren nach einem der Ansprüche 29 oder 30, weiter umfassend die Schritte
Ausmessen der Position des Implantat-Anschlussteils (14) durch das Bearbeitungswerkzeug und
Bearbeiten des Blocks derart, dass eine vorgegebene Restaurationsoberfläche relativ zur Position des Implantat-Anschlussteils (14) gebildet wird.

32. Verfahren nach einem der Ansprüche 29 bis 31, weiter umfassend die folgenden Schritte
Ausmessen einer Position und Lage eines Implantatkopfs (3), indem ein Hilfskörper (4) am Implantatkopf (3) so befestigt wird, dass der Hilfskörper (4) in vorgegebener Lage zum Implantatkopf (3) steht, und indem die Position des Hilfskörpers (4) ausgemessen wird, und
Bearbeiten des Rohlings unter Berücksichtigung der Position und Lage des Implantatkopfs (3).

## Claims

1. Blank for manufacturing a tooth crown with a block (10) made of mechanically workable material which can be grinded to a crown, wherein an implant connection part (14) is arranged at the block (10), in which an implant fixture with a fit (18) for attachment in a joint rotating way to an implant head is formed, **characterized in that** the implant connection part (14) has a sub-gingival section (19) protruding above an implant side of the surface (13) of the block (10), which tapers towards the fit (18) of the implant fixture.

2. Blank according to claim 1, wherein a cross section of the sub-gingival section (19) decreases from the surface (13) towards the fit (18) in a continuous and monotonous way.

3. Blank according to one of the preceding claims, wherein a diameter of the sub-gingival section (19) tapers by at least 1 mm from the surface (13) towards the fit (18).

4. Blank according to one of the preceding claims, wherein the cross section of the sub-gingival section decreases strictly monotonously in an area following the surface (13).

5. Blank according to one of the preceding claims, wherein the sub-gingival section (19) has a pre-polished outer surface.

6. Blank according to one of the preceding claims, wherein the outer surface of the sub-gingival section has a surface roughness Ra < 0.1.

7. Blank according to one of the preceding claims, wherein the outer surface of the sub-gingival section has a surface roughness Ra of 0.5 ± 0.01.

8. Blank according to one of the preceding claims, wherein the sub-gingival section protrudes above the surface (13) by at least 1.5 mm.

9. Blank according to claim 8, wherein the sub-gingival section (19) protrudes above the surface (13) by at least 2.0 mm.

10. Blank according to one of the preceding claims, wherein the sub-gingival section has a first, a second and a third subsection, wherein the first subsection follows the surface (13), the second subsection follows the first subsection and the third subsection follows the second subsection, and wherein the first subsection (19a) enlarges towards the implant side of the surface (13) and the second subsection and/or the third subsection enlarges towards the implant side of the surface (13).

11. Blank according to claim 10, wherein the second or the third subsection has a substantially constant diameter.

12. Blank according to one of the claims 10 or 11, wherein a height of the first and the third subsections is between 0.5 and 2 mm and/or a height of the second subsection is between 0.5 and 4 mm.

13. Blank according to one of the claims 10 to 12, wherein the first subsection has an elongate cross section.

14. Blank according to one of the preceding claims, wherein the subgingival section doesn't have corners and edges.

15. Blank according to one of the preceding claims, wherein the blank has a support (11) for attachment in a processing tool and is connected to the block (10), wherein the support (11) is arranged at least at a support-side surface (12) of the block (10) and wherein the support side (12) and the implant side surface (13) are arranged substantially perpendicularly or transversally to one another.

16. Blank according to one of the preceding claims, wherein the implant connection part (14) is made of another material than the block (10).

17. Blank according to claim 16, wherein the implant connection part (14) has a higher breaking resistance than the block (10).

18. Blank according to one of the preceding claims, wherein the implant connection part (14) is a part which can be manufactured independently from the block (10) and is anchored in the block (10).

19. Blank according to one of the preceding claims, wherein a channel (16) is provided for receiving a fixation screw for fixation to the implant head, extending from the implant section (14) transversally through the block (10).

20. Blank according to one of the preceding claims, wherein the block (10) has a lithium silicate ceramic or is made of such a ceramic.

21. Blank according to claim 20, wherein the implant connection part (14) is executed in a piece with the block (10) and is also made of the lithium silicate ceramic or comprises it.

22. Blank according to one of the claims 1 to 19, wherein the block (10) consists of composite, feldspar ceramic or leucite glass ceramic or comprises at least one of these materials.

23. Blank according to one of the preceding claims, wherein the implant connection part (14) has a convexly curved outer surface (26) which protrudes above the implant side of the surface (13).

24. Blank according to one of the preceding claims, **characterized in that** it has precisely one implant connection part (14).

25. Kit-of-parts for manufacturing a tooth crown with at least a blank according to one of the preceding claims.

26. Kit-of-parts according to claim 25,
wherein it further has a reference part (20) which is attachable to the implant connection part (14) in a defined position, for the mechanic position determination of the implant connection part (14).

27. Kit-of-parts according to one of the claims 25 or 26, wherein a channel (16) is provided for receiving a fixation screw for the fixation to the implant head, extending from the implant connection part (14) transversally through the block (10), and wherein the kit-of-parts further has a locking pin (23) which is insertable into the channel (16) and is attachable there.

28. Kit-of-parts according to claim 27,
wherein a spacer (24) is arranged at a tip of the locking pin, which is made of another material than the locking pin (23) and/or has a smaller cross section than the locking pin (23).

29. Method for manufacturing a tooth crown out of a blank with a block (10) according to one of the claims 1 to 24, wherein the block (10) is attached into a processing tool and is processed in a material erosive way and is form grinded to form a crown, **characterized in that** the block but not the implant connection part is processed in the processing tool.

30. Method according to claim 29, wherein the block (10) is connected to the processing tool at least a support side surface (12), wherein the implant connection part (14) is arranged at an implant side surface (13) which is arranged transversely to the support side surface (12), in a way such that the implant side surface (13) remains free at least in an area around the implant connection part (14).

31. Method according to one of the claims 29 or 30, further comprising the steps
measuring of the position of the implant connection part (14) by the processing tool and
processing the block in such a way that a given restoration surface is formed relatively to the position of the implant connection part (14).

32. Method according to one of the claims 29 to 31, further comprising the following steps
measuring of a position and orientation of an implant head (3), by attaching an auxiliary body (4) to the implant head (3) in such a way that the auxiliary body (4) is arranged within a given orientation with regard to the implant head (3), and by measuring the position of the auxiliary body (4), and
processing the blank by considering the position and orientation of the implant head (3).

## Revendications

1. Pièce brute pour la fabrication d'une couronne dentaire avec un bloque (10) d'un matériau mécaniquement ouvrable et qui peut être meulé dans une forme de couronne, une pièce de connexion d'implant (14) étant arrangée au bloque (10) dans lequel une fixture d'implant avec un logement (18) est formée pour une fixation rigide en rotation à une tête d'implant, **caractérisée en ce que** la pièce de connexion d'implant (14) a une section sous-gingivale (19) qui fait saillie d'une surface (13) du côté de l'implant du bloque (10) et qui s'amincit vers le logement (18) de la fixture d'implant.

2. Pièce brute selon la revendication 1, une coupe transversale de la section sous-gingivale (19) diminuant de manière continue et monotone à partir de la surface (13) vers le logement (18).

3. Pièce brute selon l'une des revendications précédentes, un diamètre de la section sous-gingivale (19) s'amincissant d'au moins 1 mm à partir de la surface (13) vers le logement (18).

4. Pièce brute selon l'une des revendications précédentes, la coupe transversale de la section sous-gingivale diminuant de manière strictement monotone dans une section qui joint la surface (13).

5. Pièce brute selon l'une des revendications précédentes, la section sous-gingivale (19) ayant une surface extérieure pré-polie.

6. Pièce brute selon l'une des revendications précédentes, la surface extérieure de la section sous-gingivale ayant une rugosité de surface Ra < 0.1.

7. Pièce brute selon l'une des revendications précédentes, la surface extérieure de la section sous-gingivale ayant une rugosité de surface Ra de 0.5 ± 0.01.

8. Pièce brute selon l'une des revendications précédentes, la section sous-gingivale faisant saillie de la surface (13) au moins 1.5 mm.

9. Pièce brute selon la revendication 8, la section sous-gingivale (19) faisant saillie de la surface (13) au moins 2.0 mm.

10. Pièce brute selon l'une des revendications précédentes, la section sous-gingivale ayant une première, une deuxième et une troisième sous-section, la première sous-section joignant la surface (13), la deuxième sous-section joignant la première sous-section et la troisième sous-section joignant la deuxième sous-section, et la première sous-section (19a) s'écartant vers la surface (13) du côté de l'implant et la deuxième sous-section et/ou la troisième sous-section s'écartant vers la surface (13) du côté de l'implant.

11. Pièce brute selon la revendication 10, la deuxième ou la troisième section ayant un diamètre essentiellement constant.

12. Pièce brute selon l'une des revendications 10 ou 11, une hauteur de la première et de la troisième sous-section étant entre 0.5 et 2 mm et/ou une hauteur de la deuxième sous-section entre 0.5 et 4 mm.

13. Pièce brute selon l'une des revendications 10 à 12, la première sous-section ayant une coupe transversale oblongue.

14. Pièce brute selon l'une des revendications précédentes, la section sous-gingivale n'ayant pas des angles et des arêtes du côté extérieur.

15. Pièce brute selon l'une des revendications précédentes, la pièce brute ayant un support (11) pour la fixation dans un outil de façonnage connecté au bloque (10), le support (11) étant arrangé à au moins une surface (12) du côté du support du bloque (10) et la surface (12) du côté du support et la surface (13) du côté de l'implant étant arrangées essentiellement de manière perpendiculaire ou oblique l'une par rapport à l'autre.

16. Pièce brute selon l'une des revendications précédentes, la pièce de connexion d'implant (14) étant d'un autre matériau que le bloque (10) .

17. Pièce brute selon la revendication 16, la pièce de connexion d'implant (14) ayant une plus haute résistance à la rupture que le bloque (10).

18. Pièce brute selon l'une des revendications précédentes, la pièce de connexion d'implant (14) étant une pièce qui peut être fabriquée indépendamment du bloque (10) et qui est ancrée dans le bloque (10).

19. Pièce brute selon l'une des revendications précédentes, un canal (16) étant prévu pour la réception d'une vis de fixation pour la fixation à la tête d'implant, s'étendant à partir de la pièce de connexion d'implant (14) transversalement à travers du bloque (10).

20. Pièce brute selon l'une des revendications précédentes, le bloque (10) ayant une céramique de silicate de lithium ou se composant d'une telle céramique.

21. Pièce brute selon la revendication 20, la pièce de connexion d'implant (14) étant réalisée en une pièce avec le bloque (10) et aussi se composant d'une ou ayant une céramique de silicate de lithium.

22. Pièce brute selon l'une des revendications 1 à 19, le bloque (10) se composant de composite, céramique de feldspath ou céramique de verre de leucite ou ayant au moins un de ces matériaux.

23. Pièce brute selon l'une des revendications précédentes, la pièce de connexion d'implant (14) ayant une surface extérieure (26) courbée en forme convexe et saillant au-dessus de la surface du côté de l'implant (13).

24. Pièce brute selon l'une des revendications précédentes, **caractérisée en ce qu'**elle possède exactement une pièce de connexion d'implant (14).

25. Lot de composants pour la fabrication d'une couronne dentaire avec au moins une pièce brute selon l'une des revendications précédentes.

26. Lot de composants selon la revendication 25, de plus ayant une pièce de référence (20) qui est rattachable à la pièce de connexion d'implant (14) dans une position définie, pour la détermination mécanique de la position de la pièce de connexion d'implant (14).

27. Lot des composants selon l'une des revendications 25 ou 26, un canal (16) étant prévu pour la réception d'une vis de fixation pour la fixation à la tête d'implant, s'étendant à partir de la pièce de connexion d'implant (14) transversalement à travers du bloque (10), et le lot de composants ayant de plus une broche de fermeture (23) qui est insérable dans le canal (16) et peut être fixée là-bas.

28. Lot de composants selon la revendication 27, un écarteur (24) étant arrangé à une pointe de la broche de fermeture, étant d'un autre matériau que la broche de fermeture (23) et/ou ayant une plus petite coupe transversale que la broche de fermeture (23).

29. Méthode pour la fabrication d'une couronne dentaire à partir d'une pièce brute avec un bloque (10) selon l'une des revendications 1 à 24, le bloque (10) étant fixé dans un outil de façonnage et façonner dans l'outil de façonnage de manière à enlever du matériau et étant meulé dans une forme de couronne, **caractérisée en ce que** le bloque, mais pas la pièce de connexion d'implant (14), est façonné dans l'outil de façonnage.

30. Méthode selon la revendication 29, le bloque (10) étant connecté par au moins une surface (12) du côté du support avec l'instrument de façonnage, la pièce de connexion d'implant (14) étant arrangée à une surface (13) du côté de l'implant de sorte que la surface (13) du côté de l'implant reste libre au moins dans une section autour de la pièce de connexion d'implant (14).

31. Méthode selon l'une des revendications 29 ou 30, de plus comprenant les pas de
mesurer la position de la pièce de connexion d'implant (14) par l'outil de façonnage et
façonner le bloque de sorte qu'une surface de restauration donnée soit formée relativement à la position de la pièce de connexion d'implant (14).

32. Méthode selon l'une des revendications 29 à 31, de plus comprenant les prochains pas
mesurer une position et une orientation d'une tête d'implant (3), par attacher un organe auxiliaire (4) à la tête d'implant (3) de sorte que l'organe auxiliaire (4) soit positionné avec une orientation donnée par rapport à la tête d'implant (3), et par mesurer la position de l'organe auxiliaire (4), et
façonner la pièce brute considérant la position et l'orientation de la tête d'implant (3).
